# EUROPEAN PATENT APPLICATION

(11) **EP 2 025 398 A1**
(43) Date of publication of application: **18.02.2009**
(21) Application number: 07743350.6
(22) Date of filing: 15.05.2007
(51) Int. Cl.: B01J 23/63, B01D 53/94, F01N 3/10

(54) **CATALYST FOR EXHAUST GAS PURIFICATION AND METHOD FOR PRODUCING THE SAME**

(30) Priority: 15.05.2006 JP 2006135081
(71) Applicant: Toyota Jidosha Kabushiki Kaisha, Toyota-shi, Aichi 471-8571 (JP)
(72) Inventor: MORIKAWA, Akira, Aichi-gun, Aichi 480-1192 (JP); TANABE, Toshitaka, Aichi-gun, Aichi 480-1192 (JP); TAKAHASHI, Naoki, Aichi-gun, Aichi 480-1192 (JP); YOSHIDA, Takeru, Toyota-shi, Aichi 471-8571 (JP); SATO, Akemi, Toyota-shi, Aichi 471-8571 (JP)
(74) Representative: Kuhnen & Wacker
(86) International application number: PCT/JP2007/059915
(87) International publication number: WO 2007/132829

(57) **Abstract**

A catalyst for purification of exhaust gases, produced by use of a catalyst component A, a catalyst component B, and a binder, the catalyst component A being produced by supporting Rh on a catalyst support for Rh, having a CO₂ adsorption amount per unit weight of from 25 µmol·g⁻¹ to 60 µmol·g⁻¹, and having a CO₂ adsorption amount per unit specific surface area of from 0.2 µmol·m⁻²·g¹ to 2.3 µmol·m⁻²·g¹,
the catalyst having a CO₂ adsorption amount per unit weight of from 18 µmol·g⁻¹ to 60 µmol·g⁻¹ and a CO₂ adsorption amount per unit specific surface area of from 0.2 µmol·m⁻²·g¹ to 2.5 µmol·m⁻²·g¹, and
a ratio of the CO₂ adsorption amount per unit weight of the catalyst to the CO₂ adsorption amount per unit weight of the catalyst component A [(CO₂ adsorption amount of the catalyst/CO₂ adsorption amount of the catalyst component A) x 100] being 75% or more.

## Description

### Technical Field

The present invention relates to a catalyst for purification of exhaust gases and a method of manufacturing the same.

### Background of the Invention

Platinum-group noble metals such as platinum (Pt), rhodium (Rh) and palladium (Pd) have been widely used as catalyst metals for purification of exhaust gases. Among these, Rh has high reduction activity to NOₓ, and thus is an essential component for three-way catalysts and the like. On the other hand, although ZrO₂ or Al₂O₃ supports having a basic oxide added thereto are frequently used in such Rh used catalysts for purification of exhaust gases, there are problems that the Rh on the ZrO₂ support is subject to grain growth during high temperature use resulting in a decrease in activity and further, in a high-temperature oxidation atmosphere, the Rh interacts (forms a solid solution) with a support, particularly with the Al₂O₃ support, thereby degrading the catalytic performance thereof. In addition, insufficiency of metallization of Rh during low-temperature use poses the problem of degrading the catalytic performance thereof.

To solve such problems, for example, JP-A2004-230241 (Patent Document 1) discloses a method of manufacturing a catalyst for purification of exhaust gases, characterized by including: slurrying and also pH-adjusting a powder that is produced by impregnating a water-soluble salt containing NOₓ absorbent element into a catalyst supporting substrate, and then by impregnating and supporting a basic noble metal solution containing a catalyst noble metal thereinto; and then applying the slurry to a honeycomb support and drying and calcining the resulting support. Additionally, JP-A61-238347 (Patent Document 2) discloses a method of manufacturing a monolithic catalyst for purification of exhaust gases, characterized by carrying out one by one: a first step of immersing only at the gas outlet side portion of a monolithic catalyst support having its wall surface coated with a supporting layer in a solution containing a basic metal such as an alkaline metal or alkaline earth metal, so as to impregnate the basic metal into the supporting layer at the gas outlet side; a second step of heating the monolithic catalyst support to a predetermined temperature; and a third step of immersing the entire monolithic catalyst support in a solution containing a catalyst solution so as to impregnate the catalyst metal in the supporting layer, so that a catalyst metal layer is formed in a deep position on the gas inlet side as well as in a shallow position on the outlet side.

However, in the catalysts for purification of exhaust gases as described in the above documents, it is impossible to solve at the same time and sufficiently both the problem of degradation of the catalytic performance due to grain growth of Rh during high-temperature use and the problem of degradation of the catalytic performance attributable to insufficient metallization of Rh during low-temperature use.

### Disclosure of the Invention

The present invention has been made in consideration of the above-described problems. An object of the present invention is to provide a catalyst for purification of exhaust gases that sufficiently suppresses the deterioration of Rh and also has excellent low-temperature performance, and to provide a method of manufacturing the catalyst for purification of exhaust gases.

The present inventors have diligently studied to accomplish the above object and found the following fact, leading to the completion of the present invention. Specifically, it is possible to provide a catalyst for purification of exhaust gases that sufficiently suppresses the deterioration of Rh and also has excellent low-temperature performance by controlling, to be in a specified range, both the CO₂ adsorption amount of a catalyst component having supported Rh therein and the CO₂ adsorption amount of the entire catalyst for purification of exhaust gases.

The catalyst for purification of exhaust gases of the present invention is a catalyst, produced by use of a catalyst component A, a catalyst component B, and a binder, the catalyst component A being produced by supporting Rh in a catalyst support for Rh, having a CO₂ adsorption amount per unit weight of from 25 µmol·g⁻¹ to 60 µmol·g⁻¹, and having a CO₂ adsorption amount per unit specific surface area of from 0.2 µmol·m⁻²·g¹ to 2.3 µmol·m⁻²·g¹,
the catalyst having a CO₂ adsorption amount per unit weight of from 18 µmol·g⁻¹ to 60 µmol·g⁻¹ and a CO₂ adsorption amount per unit specific surface area of from 0.2 µmol·m⁻²·g¹ to 2.5 µmol·m⁻²·g¹, and
a ratio of the CO₂ adsorption amount per unit weight of the catalyst to the CO₂ adsorption amount per unit weight of the catalyst component A [(CO₂ adsorption amount of the catalyst/CO₂ adsorption amount of the catalyst component A) x 100] being 75% or more.

In addition, in the catalysts for purification of exhaust gases of the present invention, the catalyst support for Rh is preferably a composite oxide including zirconium oxide and at least one metal element selected from a group consisting of the alkaline earth metals, rare earth elements, third group elements and fourth group elements other than Zr.

Moreover, in the catalysts for purification of exhaust gases of the present invention, it is preferable that the composite oxide further includes a metal oxide not forming a solid solution with the zirconium oxide and, among the metal elements, at least one metal selected from a group consisting of the rare earth elements and the alkaline earth metals forms a solid solution with at least one oxide selected from a group consisting of the zirconium oxide and the metal oxide.

Additionally, in the catalysts for purification of exhaust gases of the present invention, the metal oxide is preferably aluminum oxide.

Furthermore, in the catalysts for purification of exhaust gases of the present invention, 80% or more of primary particles of the composite oxide preferably have a particle diameter of 100 nm or less.

In addition, in the catalysts for purification of exhaust gases of the present invention, the metal element is preferably at least one metal element selected from a group consisting of La and Nd.

Moreover, in the catalysts for purification of exhaust gases of the present invention, the catalyst component B is preferably a catalyst component including at least one oxide selected from a group consisting of Al₂O₃, ZrO₂, CeO₂, MgO, Y₂O₃, La₂O₃, Pr₂O₃, Nd₂O₃, TbO₂, TiO₂ and SiO₂.

Additionally, in the catalysts for purification of exhaust gases of the present invention, the catalyst component B is preferably a catalyst component including at least one oxide selected from the group consisting of Al₂O₃, ZrO₂, CeO₂, La₂O₃, Pr₂O₃ and Nd₂O₃.

Furthermore, in the catalysts for purification of exhaust gases of the present invention, the catalyst component B preferably comprises a noble metal other than Rh, the noble metal being supported thereon.

In addition, in the catalysts for purification of exhaust gases of the present invention, the noble metal other than Rh is more preferably at least one selected from a group consisting of Pt and Pd.

A first method of manufacturing a catalyst for purification of exhaust gases of the present invention is a method, comprising a step of:
obtaining a catalyst for purification of exhaust gases from a slurry including: a catalyst component A that is produced by supporting Rh on a catalyst support for Rh, that has a CO₂ adsorption amount per unit weight of from 25 to 60 µmol·g⁻¹, and that has a CO₂ adsorption amount per unit specific surface area of from 0.2 µmol·m⁻²·g¹ to 2.3 µmol·m⁻²·g¹ (preferably, from 0.2 µmol·m⁻²·g¹ to 1.0 µmol·m⁻²·g¹); a catalyst component B; a binder and a basic material,
the catalyst having a CO₂ adsorption amount per unit weight of from 18 µmol·g⁻¹ to 60 µmol·g⁻¹ and a CO₂ adsorption amount per unit specific surface area of from 0.2 µmol·m⁻²·g¹ to 2.5 µmol·m⁻²·g¹, and
a ratio of the CO₂ adsorption amount per unit weight of the catalyst to the CO₂ adsorption amount per unit weight of the catalyst component A [(CO₂ adsorption amount of the catalyst/CO₂ adsorption amount of the catalyst component A) x 100] being 75% or more.

A second method of manufacturing a catalyst for purification of exhaust gases of the present invention is a method, comprising a step of:
obtaining a catalyst for purification of exhaust gases by bringing a catalyst into contact with a solution containing a basic material, the catalyst including: a catalyst component A that is produced by supporting Rh on a catalyst support for Rh, that has a CO₂ adsorption amount per unit weight of from 25 µmol·g⁻¹ to 60 µmol·g⁻¹, and that has a CO₂ adsorption amount per unit specific surface area of from 0.2 µmol·m⁻²·g¹ to 2.3 µmol·m⁻²·g¹; a catalyst component B; and a binder,
the catalyst having a CO₂ adsorption amount per unit weight of from 18 µmol·g⁻¹ to 60 µmol·g⁻¹ and a CO₂ adsorption amount per unit specific surface area of from 0.2 µmol·m⁻²·g¹ to 2.5 µmol·m⁻²·g¹, and
a ratio of the CO₂ adsorption amount per unit weight of the catalyst to the CO₂ adsorption amount per unit weight of the catalyst component A [(CO₂ adsorption amount of the catalyst/CO₂ adsorption amount of the catalyst component A) x 100] being 75% or more.

Incidentally, it is not certain why the catalyst for purification of exhaust gases of the present invention can accomplish the suppression of deterioration of Rh and excellent low-temperature performance at the same time, though the present inventors speculate as below. That is, in the oxidation state, Rh reacts with a basic oxide by solid state reaction and deposits as an Rh metal in a reduction atmosphere. Then, if the amount of base of the basic oxide is too small, the solid state reaction becomes insufficient and the Rh is subject to grain growth during high temperature use, whereby the catalytic performance is degraded. On the other hand, with too large amount of base, a reduction of Rh to Rh metal becomes difficult, so that activity point is lowered and then low-temperature performance is degraded.

In the catalysts for purification of exhaust gases of the present invention, the solid basicity of a catalyst component having supported Rh, as a starting material, therein and of the entire catalyst of purification of exhaust gases are controlled through the use of the CO₂ adsorption amount as a parameter. In other words, firstly, the solid basicity of the catalyst component having supported Rh therein is controlled. And then, a method of adding such as a nitric acid solution is employed since a base amount decreases due to elusion of a basic material from catalyst support for Rh in making a slurry by the addition of other catalyst components and the like. As a result, the solid basicity of the entire catalyst for purification of exhaust gases is controlled. In this manner, the grain growth of Rh during high temperature use can be suppressed, whereby the deterioration of Rh is suppressed. In addition, by the completion of control of the solid basicity of the entire catalyst for purification of exhaust gases, even when a noble metal other than Rh is supported in the catalyst component B, the movement of the Rh onto the catalyst component B or the movement of the noble metal other than Rh onto the catalyst component A can be restrained, so that a degradation in the catalytic performance due to interaction between the noble metals can also be suppressed. Moreover, the synergistic effect of both the grain growth control of Rh and the solid basicity control of the entire catalyst can improve reduction properties to an Rh metal and also enhance low temperature performance. Thus, the present inventors estimate that the suppression of deterioration of Rh and excellent low temperature performance can be simultaneously achieved in the catalyst for purification of exhaust gases of the present invention.

According to the present invention, it becomes possible to provide the catalyst for purification of exhaust gases in which the deterioration of the Rh is sufficiently suppressed as well as which has excellent low-temperature performance and the method of manufacturing the catalyst for purification of exhaust gases.

### Detailed Description of the Preferred Embodiments

The present invention will be described below in detail according to its preferred embodiments.

### <Catalyst for Purification of Exhaust Gases>

First, a catalyst for purification of exhaust gases of the present invention will be set forth. Specifically, the catalyst for purification of exhaust gases of the present invention is a catalyst, produced by use of a catalyst component A, a catalyst component B, and a binder, the catalyst component A being produced by supporting Rh in a catalyst support for Rh, having a CO₂ adsorption amount per unit weight of from 25 µmol·g⁻¹ to 60 µmol·g⁻¹, and having a CO₂ adsorption amount per unit specific surface area of from 0.2 µmol·m⁻²·g¹ to 2.3 µmol·m⁻²·g¹,
the catalyst having a CO₂ adsorption amount per unit weight of from 18 µmol·g⁻¹ to 60 µmol·g⁻¹ and a CO₂ adsorption amount per unit specific surface area of from 0.2 µmol·m⁻²·g¹ to 2.5 µmol·m⁻²·g¹, and
a ratio of the CO₂ adsorption amount per unit weight of the catalyst to the CO₂ adsorption amount per unit weight of the catalyst component A [(CO₂ adsorption amount of the catalyst/CO₂ adsorption amount of the catalyst component A) x 100] being 75% or more.

### (Catalyst Component A)

The catalyst component A according to the present invention is produced by supporting rhodium (Rh) on a catalyst support for Rh. In addition, in such catalyst component A, the CO₂ adsorption amount per unit weight needs to be from 25 µmol·g⁻¹ to 60 µmol·g⁻¹ and the CO₂ adsorption amount per unit specific surface area needs to be from 0.2 µmol·m⁻²·g¹ to 2.3 µmol·m⁻²·g¹ (preferably, from 0.2 µmol·m⁻²·g¹ to 1.0 µmol·m⁻²·g¹). Here, the CO₂ adsorption amount is an index of solid basicity. Making, to be in such ranges, the CO₂ adsorption amounts of the catalyst component A serving as a starting material enables solid basicity to be in an appropriate range, the solid basicity related to the stability and reduction liability of the rhodium oxide in the resulting catalyst for purification of exhaust gases. Moreover, such a CO₂ adsorption amount can be determined by the CO₂-TPD method.

In the catalyst component A according to the present invention, the catalyst support for Rh is preferably a composite oxide including zirconium oxide and at least one metal element selected from the group consisting of the alkaline earth metals, rare earth elements, third group elements and fourth group elements other than Zr. Zirconium oxide is low in heat resistance as compared with alumina frequently, which is used as a support of a noble metal, and thereby the specific surface area thereof is liable to decrease due to heat during used as a catalyst for purification of exhaust gases. However, used in combination with the metal element, zirconium oxide has greatly improved heat resistance thereby tending to maintain a high dispersion state of Rh during used as a catalyst.

Such composite oxide includes the zirconium oxide and at least one metal element selected from a group consisting of the alkaline earth metals, rare earth elements, third elements and fourth elements other than Zr. These metal elements are not particularly limited, and for example include yttrium (Y), lanthanum (La), praseodymium (Pr), neodymium (Nd), samarium (Sm), europium (Eu), gadolinium (Gd), terbium (Tb), dysprosium (Dy), holmium (Ho), erbium (Er), thulium (Tm), ytterbium (Yb), lutetium (Lu), magnesium (Mg), calcium (Ca), strontium (Sr), barium (Ba), cerium (Ce) and scandium (Sc). Among these metal elements, from the viewpoints of, of zirconium oxide, the crystal stability and grain growth suppression, Y, La, Pr, Nd, Yb, Mg, Ca, Ba, Ce as well as Sc are preferable, La, Nd as well as Ba are more preferable and La and Nd are particularly preferable. In addition, these metal elements can be used alone or in combination of two or more.

The composition ratio of zirconium oxide to the metal element in the composite oxide varies depending on the kinds of metal elements, and the metal element concentration relative to the zirconium oxide is preferably 1 mol% or more in terms of its oxide. If the metal element concentration is below the lower limit, the high dispersion state of the Rh is liable not to be maintained during used as a catalyst. On the other hand, although the upper limit of the metal element concentration is not particularly limited, too high metal element concentration is not good in that the affinity of rhodium oxide for a support becomes large and in that purification performance for NOₓ is degraded, particularly in a fuel-rich atmosphere.

Additionally, in the present invention, such composite oxide preferably further contains a metal oxide not forming a solid solution with the above zirconium oxide. Further inclusion of such metal oxide suppresses the aggregation of same kind of oxides since the zirconium oxide and the metal oxide become barriers for their mutual dispersion, thereby tending to be capable of suppressing the grain growth of Rh.

Such metal oxide is not particularly limited so long as it does not form a solid solution with ZrO₂ and, for example, may be aluminum oxide (Al₂O₃), MgAl₂O₄, SiO₂, and TiO₂. These metal oxides can be used alone or in combination of two or more. In addition, among these metal oxides, from the viewpoints of a large specific surface area and excellent heat resistance, aluminum oxide is particularly preferred.

Moreover, with the composition proportion of such metal oxide, the concentration of a metal element in the metal oxide in the composite oxide preferably ranges from 30 at % to 95 at % and particularly preferably ranges from 50 at % to 80 at %. If the composition proportion is below the lower limit, the advantage of oxides suppressing mutual sintering is not obtained, whereby the high-temperature durability tends to be inferior. On the other hand, if the composition proportion exceeds the upper limit, the action of ZrO₂ becomes small, whereby the amount of Rh supported on the metal oxide relatively increases, being prone to decrease in water vapor modification reaction activity.

80% or more of primary particles of the composite oxide preferably have a particle diameter of 100 nm or less. The primary particles of the composite oxide include ZrO₂ with which the metal element forms a solid solution as well as the metal oxide, and secondary particles each of which produced by aggregation of the primary particles make up a powder. Additionally, in such primary particles, ZrO₂ and the metal oxide are present in an extremely small state, that is in nano-scale, so that pores formed between the oxides also become are fine nanoscale mesopores. As a result, the primary particles can attain high specific surface area. Incidentally, a mesopore means to a pore of a diameter of from 2 nm to 50 nm in IUPC, and also means a pore of from 1.5 nm to 100 nm in some cases from the viewpoints of molecular adsorption properties and the like. A mesopore hereinbelow means a pore of a range of from the lower limit of 3.5 nm to 100 nm, principally measurable by means of a mercury porosimeter.

The methods of manufacturing the composite oxide as described above can include a coprecipitation method, a sol-gel method, and the like. For example, the coprecipitation method involves coprecipitating a zirconium compound and a compound including metal element from a solution containing the compounds, and then cleaning, drying and calcining the resulting precipitate to obtain a composite oxide including zirconium oxide stabilized by the metal element. In addition, the sol-gel method entails adding water to a mixture solution of an alkoxide of zirconium and an alkoxide containing a metal element for hydrolysis and then drying and calcining the resulting sol to obtain a composite oxide including zirconium oxide stabilized by the metal element.

Moreover, hydrothermal treatment is desirably performed to the precipitate or the sol of an oxide precursor obtained by the above method. This makes it possible to stabilize the zirconium oxide (ZrO₂) crystallite, improving heat resistance and making the specific surface area of the composite oxide in an appropriate range.

Note that, in the composite oxide obtained in this manner, only a peak of zirconium and/or the metal oxide appears and a peak attributable to the metal element does not appear by X ray diffraction. In such a case, it is estimated that the metal element, as an oxide, forms a solid solution with zirconium oxide and/or the metal oxide. In addition, in the present invention, at least one element selected from a group consisting of the rare earth elements and the alkaline earth metals preferably forms the solid solution with at least one oxide selected from a group consisting of the zirconium oxide and the metal oxide.

The catalyst component A according to the present invention is produced by supporting rhodium (Rh) in the above described catalyst support for Rh. With the supporting amount of Rh in such catalyst component A, from the viewpoints of activity and cost, the weight ratio of Rh in the catalyst component A is preferably in the range of from 0.05% to 3% by weight. Incidentally, the methods of supporting the above Rh include, for example, an adsorption support method and a water absorption support method.

### (Catalyst Component B)

The catalyst component B according to the present invention includes oxides. The catalyst component B includes at least one oxide selected from the group consisting of aluminum oxide (Al₂O₃), zirconium oxide (ZrO₂), cerium oxide (CeO₂), magnesium oxide (MgO), yttrium oxide (Y₂O₃), lanthanum oxide (La₂O₃), praseodymium oxide (Pr₂O₃), neodymium oxide (Nd₂O₃), terbium oxide (TbO₂), titanium oxide (TiO₂) and silicon oxide (SiO₂). Moreover, in the present invention, from the viewpoint of heat resistance, such catalyst component B is preferably a catalyst component including at least one oxide selected from the group consisting of Al₂O₃, ZrO₂, CeO₂, La₂O₃, Pr₂O₃ and Nd₂O₃.

In addition, in the present invention, a noble metal other than Rh may be supported in such catalyst component B. Such noble metals other than Rh include, for example, platinum (Pt), palladium (Pd), ruthenium (Ru), silver (Ag) and gold (Au). Among these, from the viewpoints of heat resistance and oxidation activity, Pt and Pd are preferred. These noble metals other than Rh can be used alone or in combination of two or more.

When the noble metal other than Rh is supported in a catalyst component B according to the present invention, as a supporting amount of the noble metal other than the above Rh, the weight ratio of the noble metal other than Rh in the catalyst component B is preferably in the range of from 0.05% to 10% by weight. If the supporting amount of the noble metal other than Rh is less than the lower limit, the catalytic performance as the catalyst for purification of exhaust gases is liable to be insufficient; on the other hand, even if a noble metal is supported exceeding the upper limit, the catalytic performance is prone to be saturated and the cost is prone to be highly increased. Additionally, the methods of supporting the noble metal other than the above Rh include, for example, an adsorption support method, and a water absorption support method.

The mixture amount of such catalyst component B is preferably in the range of from 50 to 300 parts by weight based on 100 parts by weight of the above catalyst component A. If the mixture amount of such catalyst component B is below the lower limit, the characteristic of a noble metal contained in the catalyst component B is liable not to be sufficiently exerted; on the other hand, if the mixture amount exceeds the upper limit, the warming properties are liable to decrease at the time of cold start.

### (Binder)

The binder according to the present invention is not particularly limited and the examples that are suitably used include alumina sol and zirconia sol. Moreover, the mixture amount of the binder relative to the above catalyst component A is also not particularly limited, and for example, the mixture amount of the binder is preferably in the range of from 5 to 20 parts by weight based on 100 parts by weight of the above catalyst component A.

### (Catalyst for Purification of Exhaust Gases)

The catalyst for purification of exhaust gases of the present invention is a catalyst, produced by use of the catalyst component A described above, the catalyst component B described above and the binder described above. Additionally, in the catalyst for purification of exhaust gases of the present invention, the CO₂ adsorption amount per unit weight needs to be from 18 µmol·g⁻¹ to 60 µmol·g⁻¹ and the CO₂ adsorption amount per unit specific surface area needs to be from 0.2 µmol·m⁻²·g¹ to 2.5 µmol·m⁻²·g¹, and the ratio of the CO₂ adsorption amount per unit weight to the CO₂ adsorption amount per unit weight of the above catalyst component A [(CO₂ adsorption amount of the catalyst/CO₂ adsorption amount of the catalyst component A) x 100] needs to be 75% or more. The CO₂ adsorption amount is an index of solid basicity, and making them in such ranges causes solid basicity related to the stability and reduction liability of the rhodium oxide in the resulting catalyst for purification of exhaust gases to be in an appropriate range. In addition, in the catalyst for purification of exhaust gases of the present invention, the grain growth of Rh is suppressed because the interaction between rhodium oxide and the support is relatively strong. Additionally, rhodium oxide becomes reduction liable to some extent, so that there are pluralities of Rh elements as a metal, resulting in high purification activity of the catalyst even in a low temperature region. Moreover, such CO₂ adsorption amount can be determined by the CO₂-TPD method.

The form of the catalyst for purification of exhaust gases of the present invention is not particularly limited, and the forms can include forms of a honeycomb-shaped monolithic catalyst, a pellet-shaped pellet catalyst and the like. The material used here is not particularly limited and selected, as appropriate, depending on applications or the like of a resulting catalyst; DPF base materials, monolithic base materials, pellet-shaped base materials, plate-shaped base materials, and the like are suitably adopted. In addition, the quality of material of these base materials is also not limited, and base materials are suitably adopted that include ceramics such as cordierite, silicon carbide and mullite and metals such as stainless steel including chromium and aluminum.

### <Method of Manufacturing Catalyst for Purification of Exhaust Gases>

Next, a method of manufacturing a catalyst for purification of exhaust gases of the present invention will be described. In other words, a first method of manufacturing a catalyst for purification of exhaust gases of the present invention is a method comprising a step of:
obtaining a catalyst for purification of exhaust gases from a slurry including the catalyst component A described above, the catalyst component B described above, the binder described above and a basic material to be described below,
the catalyst having a CO₂ adsorption amount per unit weight of from 18 µmol·g⁻¹ to 60 µmol·g⁻¹ and a CO₂ adsorption amount per unit specific surface area of from 0.2 µmol·m⁻²·g¹ to 2.5 µmol·m⁻²·g¹, and
the ratio of the CO₂ adsorption amount per unit weight of the above catalyst to the CO₂ adsorption amount per unit weight of the above catalyst component A [(CO₂ adsorption amount of the catalyst/CO₂ adsorption amount of the catalyst component A) x 100] being 75% or more.

As the catalyst component A, the catalyst component B and the binder according to the present invention, materials as described above can be used.

In addition, the basic materials according to the present invention include compounds (e.g., chlorides, nitrate salts, complexes) including at least one metal selected from the group consisting of the alkaline earth metals, rare earth elements, third group elements and fourth group elements other than Zr. Additionally, among these basic materials, from the viewpoints of suitable affinity for Rh and appropriate solid-phase reaction with zirconium oxide, a compound including at least one metal element selected from the group consisting of Y, La, Pr, Nd, Sm, Eu, Gd, Tb, Dy, Ho, Er, Tm, Yb, Lu, Mg, Ca, Sr, Ba, Ce and Sc is preferred, a compound including at least one metal element selected from the group consisting of Y, La, Pr, Nd, Yb, Mg, Ca, Ba, Ce and Sc is more preferred, and a compound including at least one metal element selected from the group consisting of La, Nd and Ba is particularly preferred.

In a first method of manufacturing a catalyst for purification of exhaust gases of the present invention, the adjustment of the mixture amount of the basic material in a slurry enables the CO₂ adsorption amount in a resulting catalyst for purification of exhaust gases of the present invention to be controlled in a predetermined range. The mixture amount of such a basic material varies depending on the kinds of basic materials and is preferably an amount in the range of from 2 parts by weight to 100 parts by weight in terms of oxide based on 100 parts by weight of the solid constituents of the catalyst component A, the catalyst component B and the binder in a slurry.

A second method of manufacturing a catalyst for purification of exhaust gases of the present invention is a method comprising a step of:
obtaining a catalyst for purification of exhaust gases by bringing a catalyst into contact with a solution containing the basic material described above, the catalyst including the catalyst component A described above, the catalyst component B described above, the binder described above and the basic material described above ,
the catalyst having a CO₂ adsorption amount per unit weight of from 18 µmol·g⁻¹ to 60 µmol·g⁻¹ and a CO₂ adsorption amount per unit specific surface area of from 0.2 µmol·m⁻²·g¹ to 2.5 µmol·m⁻²·g¹, and
the ratio of the CO₂ adsorption amount per unit weight of the above catalyst to the CO₂ adsorption amount per unit weight of the above catalyst component A [(CO₂ adsorption amount of the catalyst/CO₂ adsorption amount of the catalyst component A) x 100] being 75% or more.

As the catalyst component A, the catalyst component B, the binder and the basic material according to the present invention, materials as described above can be used. In addition, the solvent used in the solution containing the basic material is not particularly limited, and water, ethanol, a mixture solvent of water and ethanol, and the like can be used.

In the second method of manufacturing a catalyst for purification of exhaust gases of the present invention, first, the catalyst containing the catalyst component A, the catalyst component B and the binder is prepared and then brought into contact with the solution containing the basic material. Thereafter, the adjustment of the concentration of the basic material in the solution containing the basic material enables the CO₂ adsorption amount in a resulting catalyst for purification of exhaust gases of the present invention to be controlled in a predetermined range. The concentration of the basic material in such solution varies depending on the kinds of basic materials and is preferably in the range of from 0.7 weight % to 30 weight % in terms of oxide.

### Examples

The present invention will be more specifically set forth below by way of examples and comparative examples; however, the invention is by no means limited to the examples below.

### (Preparation Example 1)

First, predetermined amounts of an aqueous ammonium nitrate solution, an aqueous zirconium oxynitrate solution and an aqueous lanthanum nitrate solution were admixed, and the resulting solution was added to an aqueous ammonia solution containing 1.2 times NH₃ in amount as much as neutralization equivalent of the cation contained in the above solution (pH: 9 or more), with sufficient agitation, to thereby obtain a hydroxide precursor. The resulting precursor was centrifuged and sufficiently washed and then baked at 400°C for 5 hours in the atmosphere, and further calcined at 700°C for 5 hours and then at 900°C for 5 hours, in the atmosphere, to obtain a composite oxide. The composition of Al₂O₃/ZrO₂/La₂O₃ in the resulting composite oxide was 50/95/2.5 in molar ratio.

Next, a predetermined amount of the resulting composite oxide was dispersed in an aqueous solution in which a predetermined amount of neodymium nitrate was dissolved and then the resulting material was agitated for 2 hours. Subsequently, the solvent was removed by evaporation and the resultant material was dried at 110°C for 12 hours in the atmosphere and then calcined at 900°C for 5 hours in the atmosphere to obtain a catalyst support for Rh. The impregnated neodymium nitrate was made to be an amount equivalent to 2 weight % of the amount of the entire catalyst support for Rh in terms of Nd₂O₃.

Next, Rh was supported in the resulting catalyst support for Rh using an aqueous Rh(NO₃)₃ solution and then the resultant material was calcined at 500°C for 3 hours in the atmosphere to obtain a catalyst component A1. The supporting amount of Rh in the resulting catalyst component A1 was 0.4 g based on 60 g of the catalyst support for Rh.

### (Preparation Example 2)

A catalyst component A2 was obtained as in Preparation Example 1 with the exception that the aqueous aluminum nitrate solution was not used. In addition, the composition of ZrO₂/La₂O₃ in the resulting composite oxide was 95/2.5 in molar ratio.

### (Preparation Example 3)

Pt was supported on θ-Al₂O₃ using an aqueous Pt(NO₂)₂(NH₃) solution and then the resultant material was calcined at 300°C for 3 hours in the atmosphere to obtain a catalyst component B. The supporting amount of Pt was 0.9 g based on 60 g of θ-Al₂O₃.

### (Example 1)

First, the catalyst component A1 (60 g), θ-Al₂O₃ (60 g), alumina sol (20 g) and ion exchanged water were admixed and the resulting material was dispersed using an atlighter to obtain a slurry having a solid ingredient of about 47%. Next, to 25 g of the resulting slurry was added 20 ml of aqueous solution containing neodymium nitrate equivalent to 0.7 g in terms of Nd₂O₃, the resultant material was agitated for 30 minutes and then the solvent was removed by evaporation after 30-minute agitation. The remaining solid ingredient was dried at 110°C for 12 hours and further calcined at 500°C for 1 hour in the atmosphere to obtain a catalyst powder. Next, the resulting catalyst powder was molded in a pellet shape of ϕ 0.5 mm to 1 mm to obtain a catalyst for purification of exhaust gases.

### (Example 2)

A catalyst for purification of exhaust gases was obtained as in Example 1 except that 20 ml of an aqueous solution containing neodymium nitrate equivalent to 1.2 g in terms of Nd₂O₃ was added to the slurry.

### (Example 3)

A catalyst for purification of exhaust gases was obtained as in Example 1 except that 20 ml of an aqueous solution containing neodymium nitrate equivalent to 3.2 g in terms of Nd₂O₃ was added to the slurry.

### (Example 4)

A catalyst for purification of exhaust gases was obtained as in Example 1 except that 20 ml of an aqueous solution containing neodymium nitrate equivalent to 6.7 g in terms of Nd₂O₃ was added to the slurry.

### (Example 5)

A catalyst for purification of exhaust gases was obtained as in Example 1 except that 20 ml of an aqueous solution containing neodymium nitrate equivalent to 10.1 g in terms of Nd₂O₃ was added to the slurry.

### (Example 6)

A catalyst for purification of exhaust gases was obtained as in Example 1 except that the catalyst component A2 obtained in Preparation Example 2 was used in place of the catalyst component A1 obtained in Preparation Example 1.

### (Example 7)

A catalyst for purification of exhaust gases was obtained as in Example 1 except that neodymium nitrate was used in place of the lanthanum nitrate of the catalyst component A.

### (Example 8)

A catalyst for purification of exhaust gases was obtained as in Example 1 except that the catalyst component B obtained in Preparation Example 3 was used in place of θ-Al₂O₃.

### (Comparative Example 1)

A catalyst for comparison for purification of exhaust gases was obtained as in Example 1 except that the aqueous Nd nitrate solution was not added to the slurry.

### (Comparative Example 2)

A catalyst for comparison for purification of exhaust gases was obtained as in Example 1 except that 20 ml of an aqueous solution containing neodymium nitrate equivalent to 12 g in terms of Nd₂O₃ was added to the slurry.

### (Comparative Example 3)

A catalyst for comparison for purification of exhaust gases was obtained as in Example 7 except that the aqueous Nd nitrate solution was not added to the slurry.

### <Measurement of CO₂ Adsorption Amount>

### (i) Measurement of the CO₂ adsorption amount per unit weight

The CO₂ adsorption amounts per unit weight of the catalyst components obtained in Preparation Examples 1 and 2 and the catalysts for purification of exhaust gases obtained in Examples 1 to 8 and Comparative Examples 1 to 3 were measured. In other words, a temperature-programmed desorption measuring apparatus (TPD) (available from OHKURA RIKEN INC.) was used as a measuring apparatus, and the CO₂ adsorption amounts per unit weight of the catalyst components and the catalysts for purification of exhaust gases were measured by the CO₂-TPD method under the following conditions. In addition, oxygen pretreatment was conducted for the removal of impurities on a catalyst.
Pretreatment: O₂ (20%)/He, 20 ml/min, 600°C, 10 min → He, 20 ml/min, 600°C, 10 min
Adsorption step: CO₂ (2%)/He, 20 ml/min. 300°C, 15 min
Measurement (Desorption step): He, 20 ml/min, 300°C → 600°C, 20°C/min
Catalyst amount: 0.4 g
Detector: Mass spectrometer

### (ii) Measurement of the CO₂ adsorption amount per unit specific surface area

The CO₂ adsorption amounts per unit specific surface area of the catalyst components obtained in Preparation Examples 1 and 2 and the catalysts for purification of exhaust gases obtained in Examples 1 to 8 and Comparative Examples 1 to 3 were measured. In other words, first, the specific surface areas of the catalyst components and the catalysts for purification of exhaust gases were measured by a BET 1 point method using a specific surface measuring apparatus (available from Micro Data Co. , Ltd.) under the following conditions. Next, the division of a measurement of the above CO₂ adsorption amount per unit weight by a measurement of a specific surface area was led to the calculation of a CO₂ adsorption amount per unit specific surface area.
Pretreatment atmosphere: N₂
Pretreatment temperature: 200°C, 15 min
Pretreatment gas flow rate: 25 ml/min per a reaction tube Adsorption gas: N₂ (30%)/He
Adsorption gas flow rate: 25 ml/min per a reaction tube
Adsorption temperature: -196°C (Liquid nitrogen was used)

### <Measurement of Noble Metal Dispersibility>

First, the durability tests of the catalysts for purification of exhaust gases obtained in Examples 1 to 8 and Comparative Examples 1 to 3 were carried out. In other words, a rich gas including CO (2%), CO₂ (10%), O₂ (0%), H₂O (3%) and N₂ (balance) and a lean gas including CO (0%), CO₂ (10%), O₂ (1%), H₂O (3%) and N₂ (balance) were alternately supplied to a catalyst for purification of exhaust gases for 5 minutes totally for 50 hours at 1,000°C at a space velocity (SV) of 10,000h⁻¹.

Next, the Rh dispersibility of the catalyst for purification of exhaust gases after durability testing or the dispersibilities of Pt and Rh (noble metal dispersibilities) of the catalyst after durability testing were measured. In addition, as a measuring method, the method described in an example of Japanese Patent Application Publication No. 2004-340637 was used.

### <Evaluation Results>

Table 1 shows the measurement results of the CO₂ adsorption amounts per unit weight, the specific surface areas, the CO₂ adsorption amounts per unit specific surface area and the Rh dispersibilities after durability testing or the noble metal dispersibilities after durability testing in the catalysts for purification of exhaust gases obtained in Examples 1 to 8 and Comparative Examples 1 to 3. Also, Table 1 shows the measurement results of the CO₂ adsorption amounts per unit weight, the specific surface areas and the CO₂ adsorption amounts per unit specific surface area in the catalyst components obtained in Preparation Examples 1 and 2.

**[Table 1]**

| Rh-based | CO₂ adsorption amount per unit weight ( µmol·g⁻¹ ) | Specific surface area (g·m⁻² ) | CO₂ adsorption amounts per unit specific surface area ( µmol·m⁻²·g¹ ) | Rh dispersibility after durability testing (%) |
|---|---|---|---|---|
| Example 1 | 21.1 | 107 | 0.2 | 9.2 |
| Example 2 | 27.7 | 98 | 0.3 | 10.2 |
| Example 3 | 40.2 | 85 | 0.5 | 9.3 |
| Example 4 | 48.9 | 60 | 0.8 | 9.7 |
| Example 5 | 57.9 | 41 | 1.4 | 7.6 |
| Example 6 | 41.9 | 46 | 0.9 | 8.2 |
| Example 7 | 21.9 | 109 | 0.2 | 8.6 |
| Comparative Example 1 | 14.6 | 136 | 0.1 | 6.9 |
| Comparative Example 2 | 79.0 | 30 | 2.6 | 6.8 |
| Preparation Example 1 | 26.0 | 90 | 0.3 | - |
| Preparation Example 2 | 50.6 | 54 | 0.9 | - |
| Rh-Pt based | CO₂ adsorption amount per unit weight ( µmol·g⁻¹ ) | Specific surface area ( g·m⁻² ) | CO₂ adsorption amounts per unit specific surface area ( µmol·m⁻²·g¹ ) | Noble metal dispersibility after durability testing (%) |
| Example 8 | 21.0 | 107 | 0.2 | 13.1 |
| Comparative Example3 | 14.8 | 134 | 0.1 | 9.4 |

As apparent from the results indicated in Table 1, the catalysts for purification of exhaust gases of the present invention (Examples 1 to 7) in which the CO₂ adsorption amount of the catalyst component A and of the catalyst for purification of exhaust gases are controlled in the specified ranges have been confirmed to attain excellent Rh dispersibilities even after durability testing. Thus, in the catalysts for purification of exhaust gases of the present invention, it has been confirmed that the deterioration of Rh can be sufficiently suppressed and also excellent low-temperature performance can be attained. In addition, the catalyst for purification of exhaust gases of the present invention (Example 8) in which the CO₂ adsorption amount of the catalyst component A and of the catalyst for purification of exhaust gases are controlled in the specified ranges was high in dispersibilities of Pt and Rh (noble metal dispersibilities) as compared with the catalyst for purification of exhaust gases in which the CO₂ adsorption amount is not controlled in the specified range (Comparative Example 3). Consequently, by the present invention, it has been also confirmed that the deterioration of a noble metal was sufficiently suppressed and that a catalyst for purification of exhaust gases having excellent low-temperature performance was obtained.

### Industrial Applicability

As described above, according to the present invention, it becomes possible to provide a catalyst for purification of exhaust gases in which the deterioration of the Rh is sufficiently suppressed and which has excellent low-temperature performance and a method of manufacturing the catalyst for purification of exhaust gases.

## Claims

1. A catalyst for purification of exhaust gases, produced by use of a catalyst component A, a catalyst component B, and a binder, the catalyst component A being produced by supporting Rh on a catalyst support for Rh, having a CO₂ adsorption amount per unit weight of from 25 µmol·g⁻¹ to 60 µmol·g⁻¹, and having a CO₂ adsorption amount per unit specific surface area of from 0.2 µmol·m⁻²·g¹ to 2.3 µmol·m⁻²·g¹,
the catalyst having a CO₂ adsorption amount per unit weight of from 18 µmol·g⁻¹ to 60 µmol·g⁻¹ and a CO₂ adsorption amount per unit specific surface area of from 0.2 µmol·m⁻²·g¹ to 2.5 µmol·m⁻²·g¹, and
a ratio of the CO₂ adsorption amount per unit weight of the catalyst to the CO₂ adsorption amount per unit weight of the catalyst component A [(CO₂ adsorption amount of the catalyst/CO₂ adsorption amount of the catalyst component A) x 100] being 75% or more.

2. The catalyst for purification of exhaust gases according to claim 1, wherein
the catalyst support for Rh is a composite oxide including zirconium oxide and at least one metal element selected from a group consisting of alkaline earth metals, rare earth elements, third group elements and fourth group elements other than Zr.

3. The catalyst for purification of exhaust gases according to claim 2, wherein
the composite oxide further comprises a metal oxide not forming a solid solution with the zirconium oxide, and
among the metal elements, at least one metal element selected from a group consisting of the rare earth elements and the alkaline earth metals forms a solid solution with at least one oxide selected from a group consisting of the zirconium oxide and the metal oxide.

4. The catalyst for purification of exhaust gases according to claim 3, wherein
the metal oxide is aluminum oxide.

5. The catalyst for purification of exhaust gases according to claim 2, wherein
80% or more of primary particles of the composite oxide have a particle diameter of 100 nm or less.

6. The catalyst for purification of exhaust gases according to claim 2, wherein
the metal element is at least one metal element selected from a group consisting of La and Nd.

7. The catalyst for purification of exhaust gases according to claim 1, wherein
the catalyst component B is a catalyst component comprising at least one oxide selected from a group consisting of Al₂O₃, ZrO₂, CeO₂, MgO, Y₂O₃, La₂O₃, Pr₂O₃, Nd₂O₃, TbO₂, TiO₂ and SiO₂.

8. The catalyst for purification of exhaust gases according to claim 1, wherein
the catalyst component B is a catalyst component comprising at least one oxide selected from a group consisting of Al₂O₃, ZrO₂, CeO₂, La₂O₃, Pr₂O₃ and Nd₂O₃.

9. The catalyst for purification of exhaust gases according to claim 1, wherein
the catalyst component B comprises a noble metal other than Rh, the noble metal being supported thereon.

10. The catalyst for purification of exhaust gases according to claim 9, wherein
the noble metal other than Rh is at least one selected from a group consisting of Pt and Pd.

11. A method of manufacturing a catalyst for purification of exhaust gases, comprising a step of:
obtaining a catalyst for purification of exhaust gases from a slurry including: a catalyst component A that is produced by supporting Rh on a catalyst support for Rh, that has a CO₂ adsorption amount per unit weight of from 25 µmol·g⁻¹ to 60 µmol·g⁻¹, and that has a CO₂ adsorption amount per unit specific surface area of from 0.2 µmol·m⁻²·g¹ to 2.3 µmol·m⁻²·g¹; a catalyst component B; a binder; and a basic material,
the catalyst having a CO₂ adsorption amount per unit weight of from 18 µmol·g⁻¹ to 60 µmol·g⁻¹ and a CO₂ adsorption amount per unit specific surface area of from 0.2 µmol·m⁻²·g¹ to 2.5 µmol·m⁻²·g¹, and
a ratio of the CO₂ adsorption amount per unit weight of the catalyst to the CO₂ adsorption amount per unit weight of the catalyst component A [(CO₂ adsorption amount of the catalyst/CO₂ adsorption amount of the catalyst component A) x 100] being 75% or more.

12. A method of manufacturing a catalyst for purification of exhaust gases, comprising a step of:
obtaining a catalyst for purification of exhaust gases by bringing a catalyst into contact with a solution containing a basic material, the catalyst including: a catalyst component A that is produced by supporting Rh on a catalyst support for Rh, that has a CO₂ adsorption amount per unit weight of from 25 µmol·g⁻¹ to 60 µmol·g⁻¹, and that has a CO₂ adsorption amount per unit specific surface area of from 0.2 µmol·m⁻²·g¹ to 2.3 µmol·m⁻²·g¹; a catalyst component B; and a binder,
the catalyst having a CO₂ adsorption amount per unit weight of from 18 µmol·g⁻¹ to 60 µmol·g⁻¹ and a CO₂ adsorption amount per unit specific surface area of from 0.2 µmol·m⁻²·g¹ to 2.5 µmol·m⁻²·g¹, and
a ratio of the CO₂ adsorption amount per unit weight of the catalyst to the CO₂ adsorption amount per unit weight of the catalyst component A [(CO₂ adsorption amount of the catalyst/CO₂ adsorption amount of the catalyst component A) x 100] being 75% or more.
